# EUROPEAN PATENT SPECIFICATION

(11) **EP 3 367 522 B1**
(45) Date of publication and mention of the grant of the patent: **06.03.2019**
(21) Application number: 17207300.9
(22) Date of filing: 14.12.2017
(51) Int. Cl.: H02B 1/56, H02B 13/01

(54) **HEAT RADIATOR FOR SOLID INSULATED SWITCHGEAR UNIT, SOLID INSULATED SWITCHGEAR UNIT, AND RAILWAY VEHICLE**
KÜHLKÖRPER FÜR EINE FESTSTOFFISOLIERTE SCHALTGERÄTEEINHEIT, FESTSTOFFISOLIERTE SCHALTGERÄTEEINHEIT UND SCHIENENFAHRZEUG
RADIATEUR DE CHALEUR POUR INSTALLATION DE COMMUTATION ÉLECTRIQUE À ISOLATION SOLIDE, INSTALLATION DE COMMUTATION ÉLECTRIQUE À ISOLATION SOLIDE ET VÉHICULE FERROVIAIRE

(30) Priority: 28.02.2017 JP 2017035879
(43) Date of publication of application: 29.08.2018
(73) Proprietor: Hitachi Industrial Equipment Systems Co., Ltd., Tokyo 101-0022 (JP)
(72) Inventor: SATO, Takashi, Chiyoda-ku, Tokyo 100-8280 (JP); NAKAYAMA, Yasuaki, Chiyoda-ku, Tokyo 100-8280 (JP); YABU, Masato, Chiyoda-ku, Tokyo 100-0022 (JP); TAMURA, Kozo, Chiyoda-ku, Tokyo 100-0022 (JP); TAI, Yuuki, Chiyoda-ku, Tokyo 100-0022 (JP)
(74) Representative: Strehl Schübel-Hopf & Partner

(56) References cited:
- EP-A1- 2 665 147
- WO-A1-2016/027386

## Description

### BACKGROUND OF THE INVENTION

### Technical Field

The present invention relates to a heat radiator for a solid insulated switchgear unit mounted in a railway vehicle, and more particularly, to a heat radiator attached to a high-voltage pull-through cable branch unit as a solid insulated switchgear unit which is mounted in a railway vehicle.

### 1. Background Art

Conventionally, a high-voltage pull-through cable branch unit mounted in a railway vehicle often lacks a switching function. When the branch unit does not have a switching function, upon occurrence of a ground fault in any of the high-voltage pull-through cables, the crew manually separates the circuit. It takes a lot of trouble for the crew. To improve this inconvenience, for example, the International Patent (Laid-Open) No. 2012/95895 discloses a branch unit having a switching function (circuit breaker unit).

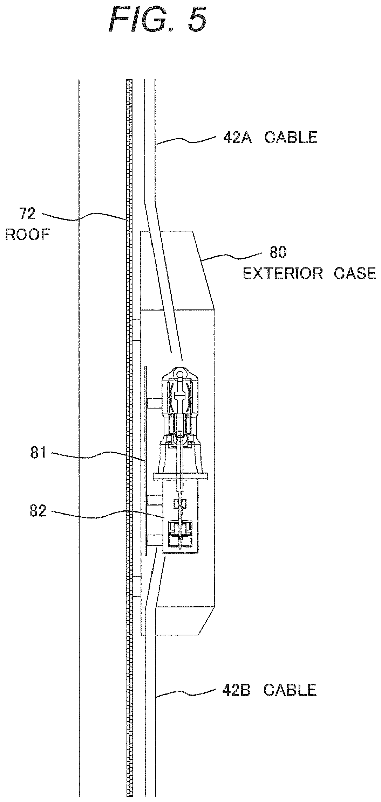

According to in the international patent (laid-open) No. 2012/95895, as shown in the abstract, Fig. 5 and the like, the railway vehicle has a power collector for collecting power from an overhead line, a circuit breaker unit connected to the power collector and disposed on the roof of the railway vehicle, and a plurality of power cables connected to the circuit breaker unit. The circuit breaker unit has a circuit breaker disposed above the roof and connected to a circuit connected to the power collector, and branch joints connected to the plurality of power cables and disposed below the circuit breaker while being integrally connected to the terminal portions of the circuit breaker. In this configuration, the branch joint has eight bushings. The four of the eight bushings are respectively connected to a high-voltage cable having a T cable head.

In the international patent (laid-open) No. 2012/95895, the periphery of the conductor is covered with solid insulating material and radiation is limited. There is a tendency of temperature rise upon load current energization. The international patent (laid-open) No. 2016/27386 discloses a heat radiator to improve such inconvenience.

In the international patent (laid-open) No. 2016/27386, as described in the abstract or the like, the heat radiator is equipped with: a heat releasing member of a heat releasing plate or the like, made of a metal material, having a predetermined area; a connection conductor fixed to the heat releasing member and connected to a main circuit of the solid-insulated device; an insulating layer provided around the heat releasing member and the connection conductor; an interface connection portion exposing an end of the connection conductor; and a ground layer provided on the outer periphery of the insulating layer. The heat releasing member can be directly connected to the main circuit of the solid-insulated device. It is possible to significantly suppress the temperature rise.

In the heat radiator in the international patent (laid-open) No. 2016/27386, when the connection conductor of the heat radiator is inserted into the connection portion connected to the main circuit conductor on the device main body side, the heat is conducted so as to suppress the temperature rise in the main circuit conductor. In the connection portion, the tight contact is weak and the thermal resistance is high. The efficiency of the heat transmission from the high-temperature main circuit conductor to the low-temperature heat radiator is low. Further, as it is necessary to fix an insulation flange having the interface connection portion to the device main body side with plural bolts, attaching workability is degraded.

### SUMMARY OF THE INVENTION

The present invention has been made in consideration of the above situation, and provides a heat radiator for a solid insulated switchgear unit, capable of reducing thermal resistance in a connection part between a main circuit conductor and the heat radiator, and improving attaching workability.

To address the above problem, the present invention provides a heat radiator for a solid insulated switchgear unit attached to a bushing conductor of the solid insulated switchgear unit, including: a heat radiation member of metal material, having a connection part with a bolt through hole; a housing of solid insulation material, having a head part in which the bushing conductor is inserted and an insulation plug insertion part in which an insulation plug is inserted; and a bolt that fastens the heat radiation member to the bushing conductor. The insulation plug insertion part and the head part communicate with each other. The bolt is inserted from the insulation plug insertion part side, through the bolt through hole of the connection part projected in the inside of the head part.

Further, the present invention provides a solid insulated switchgear unit to which the above-described heat radiator is attached. The bolt is inserted through the bolt through hole provided inside the head part of the heat radiator, to fasten the heat radiator to the bushing conductor of the solid insulated switchgear unit. Further, an opening of the head part of the heat radiator is tightly closed with the insulation plug.

According to one aspect of the present invention, it is possible to provide a heat radiator for a solid insulated switchgear unit, capable of reducing thermal resistance in a connection part between a main circuit conductor and the radiator, and improving attaching workability, in addition to the suppression of temperature rise upon load current energization.

### BRIEF DESCRIPTION OF THE DRAWINGS

Fig. 1 illustrates an example of vehicle formation according to a first embodiment of the present invention;
Fig. 2 is a feeder circuit diagram in the vehicle formation according to the first embodiment;
Fig. 3 is a plan view showing arrangement of a switchgear unit according to the first embodiment;
Fig. 4 is a plan view showing a fit-out status where the switchgear unit in Fig. 3 is accommodated in an exterior case;
Fig. 5 is a side view of Fig. 4;
Fig. 6 is a plan view showing parts arrangement of the switchgear unit according to the first embodiment;
Fig. 7 is a plan view showing a heat radiator according to the first embodiment;
Fig. 8 is a plan view showing the heat radiator according to a second embodiment of the present invention;
Fig. 9 is a plan view showing the heat radiator according to a third embodiment of the present invention;
Fig. 10 is a plan view showing the heat radiator according to a fourth embodiment of the present invention;
Fig. 11 is a plan view showing the heat radiator according to a fifth embodiment of the present invention;
Fig. 12 is a side view showing the heat radiator according to the fifth embodiment;
Fig. 13 is a plan view showing the heat radiator according to a sixth embodiment of the present invention;
Fig. 14 is a side view showing the heat radiator according to the sixth embodiment;
Fig. 15 is a plan view showing the heat radiator according to a seventh embodiment of the present invention;
Fig. 16 is a side view showing the heat radiator according to the seventh embodiment;
Fig. 17 is a plan view showing the heat radiator according to an eighth embodiment of the present invention; and
Fig. 18 is a plan view showing parts arrangement of the heat radiator according to the eighth embodiment.

### DETAILED DESCRIPTION OF THE PREFERRED EMBODIMENTS

Hereinbelow, embodiments preferable upon implementation of the present invention will be described using the drawings. Note that the following embodiments merely show examples, and the following particular aspects do not pose any limit on the present invention. The present invention is modified in various aspects including the following embodiments.

### First Embodiment

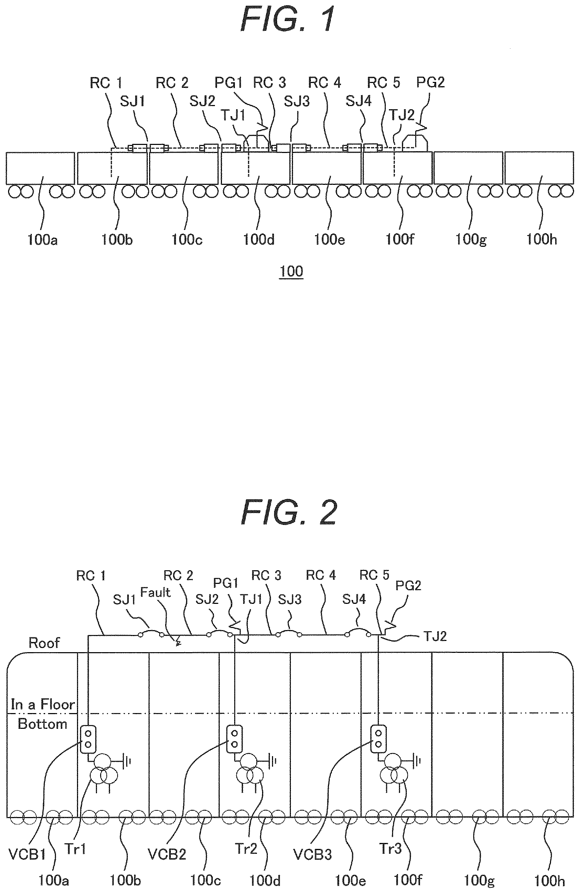

A first embodiment of the present invention will be described using Figs. 1 to 7.

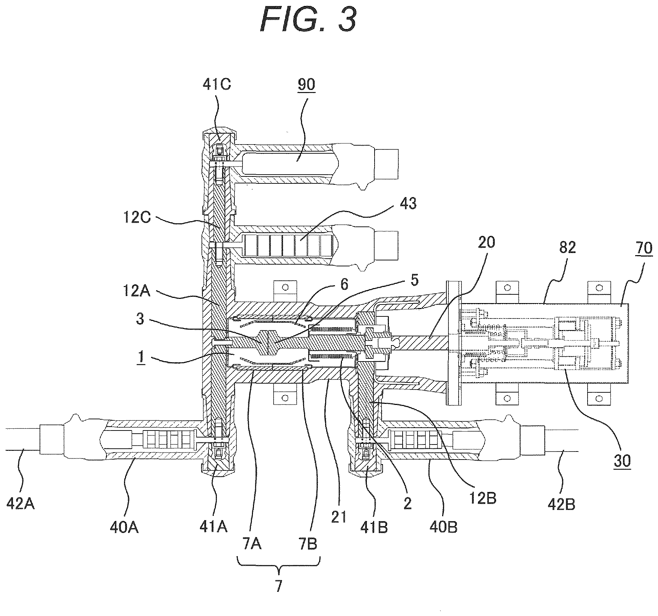

Fig. 1 illustrates an example of vehicle formation of a railway vehicle 100 according to the first embodiment. As shown in Fig. 1, the railway vehicle 100 has eight vehicles 100a to 100h. High-voltage pull-through cables RC1 to RC5 are provided on the roofs of these vehicles. The high-voltage pull-through cables RC3 and RC5 are connected to pantographs PG1 and PG2, to receive electric power from a feeder line (not shown). Further, the respective cables are connected among the vehicles with linear joints SJ1 to SJ4, and branched in a vehicle bottom direction with T branch joints TJ1 and TJ2. As described later with reference to Fig. 3 and the like, the T branch joint TJ and the linear joint SJ form an integrated switchgear unit 70.

Next, a feeder circuit for the railway vehicle 100 will be described using Fig. 2. As shown in Fig. 2, the second vehicle 100b, the fourth vehicle 100d, and the sixth vehicle 100f are respectively provided with power reception vacuum breakers VCB1 to VCB3 and main transformers Tr1 to Tr3 in the bottom.

Further, the high-voltage pull-through cable RC1 in the second vehicle 100b is directly connected to the primary side of the power reception vacuum breaker VCB1 provided in the bottom. The secondary side of the power reception vacuum breaker VCB1 is connected to the primary winding of the main transformer Tr1. The secondary winding of the main transformer Tr1 supplies electric power to the electric motor. The tertiary winding supplies electric power to auxiliary devices such as air conditioners and illumination devices. Similarly, in the fourth vehicle 100d and the sixth vehicle 100f, the high-voltage pull-through cables branched with the T branch joints TJ1 and TJ2 are respectively connected to the primary side of the power reception vacuum breakers VCB2 and VCB3 provided in the bottom. The secondary side of the power reception vacuum breakers VCB2 and VCB3 is connected to the primary winding of the main transformers Tr2 and Tr3. The secondary winding of the main transformers Tr2 and Tr3 supplies electric power to the electric motor, and the tertiary winding supplies electric power to the auxiliary devices.

In this manner, the power reception vacuum breakers VCB1 to VCB3 and the respective main transformers Tr1 to Tr3 are provided in the bottom. The other electric devices (RC, SJ, PG and TJ) are provided on the roof. It is inconvenient for the operator to work on the roof, accordingly, it is preferable that the operator can work without moving to the roof as much as possible. Further, when devices are provided on the roof, the space is limited especially in the height direction of the vehicle roof. Accordingly, it is desired that the height of the electric devices are reduced.

In Fig. 2, upon occurrence of a ground fault in a position indicated with "Fault", the linear joint SJ2 is automatically released based on an external command. It is possible to continue operation by separating only the main transformer Tr1. More particularly, a movable electrode 5 in a switchgear unit 70 to be described below is operated. In the present embodiment, the ground fault has occurred in the position indicated with "Fault", and to prevent fault spread, the circuit separation is performed only at the linear joint SJ2. It goes without saying that separation is performed in a corresponding linear joint in accordance with position of the ground fault. With this structure, it is possible to automatically separate a high-voltage cable including a faulty part from a sound high-voltage cable without operator's moving to the vehicle roof.

Fig. 3 shows the details of the switchgear unit 70 to which a heat radiator 90 according to the first embodiment is attached. As shown in Fig. 3, the switchgear unit 70 has a vacuum interrupter 1, configured with a fixed electrode 3, the movable electrode 5 to be in contact with or away from the fixed electrode 3, an arc shield 6 which covers the fixed electrode 3 and the movable electrode 5, cylindrical-shaped ceramic insulation cylinders 7A and 7B which support the arc shield 6 and which form an outer container of the vacuum interrupter 1, a bellows 2, and the like. The outer container of the vacuum interrupter 1 is formed by covering the both ends of the ceramic insulation cylinders 7A and 7B, to maintain internal vacuum environment.

The fixed electrode 3 is connected to a fixed conductor 3a. The fixed conductor 3a is pulled out of the vacuum interrupter 1, and is electrically connected to a bushing conductor 12A on the fixed conductor 3a side. The movable electrode 5 is connected to a movable conductor 5a. The movable conductor 5a is pulled out of the vacuum interrupter 1, and is electrically connected to a bushing conductor 12B on the movable conductor 5a side.

The bushing conductor 12A on the fixed conductor 3a side and the bushing conductor 12B on the movable conductor 5a side are molded with solid insulation material such as epoxy resin and form an insulation case 21. On the movable side of the vacuum interrupter 1, the bellows 2 is provided between the movable conductor 5a and an end plate on the movable side, such that the vacuum state in the vacuum interrupter 1 is maintained and the movable conductor 5a is movable.

Further, an electromagnetic operation device 30 to operate an air insulation operation rod 20 is provided on the movable side of the vacuum interrupter 1. Although the detailed description of the electromagnetic operation device 30 is omitted, a driving force is generated by e.g. using a combination of a permanent magnet and an electromagnet as a coil, and ON/OFF switching energization to the coil forming the electromagnet. It is possible to ensure a sufficient insulation distance between the vacuum interrupter 1 and the electromagnetic operation device 30 and realize free contact/separation between the fixed electrode 3 and the movable electrode 5 by operating a movable electrode driving shaft integrally connecting the air insulation operation rod 20 and the movable conductor 5a with a metal adapter, with this electromagnetic operation device 30.

The insulation case 21, in close contact with the vacuum interrupter 1 and the bushing conductors 12A and 12B, covers these members, and further, also covers the periphery of the air insulation operation rod 20. The space around the air insulation operation rod 20 is sealed with the insulation case 21 and a sealing unit, and an insulation gas such as dry air or an SF6 gas is included inside. Note that as the sealing unit used here, a linear seal or a bellows is applied. The air insulation operation rod 20 is connected to the electromagnetic operation device 30.

A plug-in arrester 43 which absorbs overvoltage is connected to an upper (in the drawing) end of the bushing conductor 12A. Further, the heat radiator 90 is connected to a further upper part. Upon energization with a load current from the cable 42A to the cable 42B, the temperature of the vacuum interrupter 1 rises due to Jules loss with contact resistance in the electric contact surface between the fixed electrode 3 and the movable electrode 5. The heat is transmitted through the bushing conductors 12A and 12C to the heat radiator 90, and the heat is radiated with the heat radiator 90, thus the temperature rise in the vacuum interrupter 1 is suppressed. With this configuration, it is possible to suppress the temperature of the vacuum interrupter 1 to lower than a desired temperature value (e.g. 75°).

Note that in the present embodiment, the vacuum interrupter 1 and the electromagnetic operation device 30 are provided on an approximately linear line. When the T cable head 40B, the arrester 43 and the heat radiator 90 are connected, the electromagnetic operation device 30 and the T cable head 40B and the like do not interfere with each other. It is possible to reduce the height and width of the switchgear unit 70 after the cable connection.

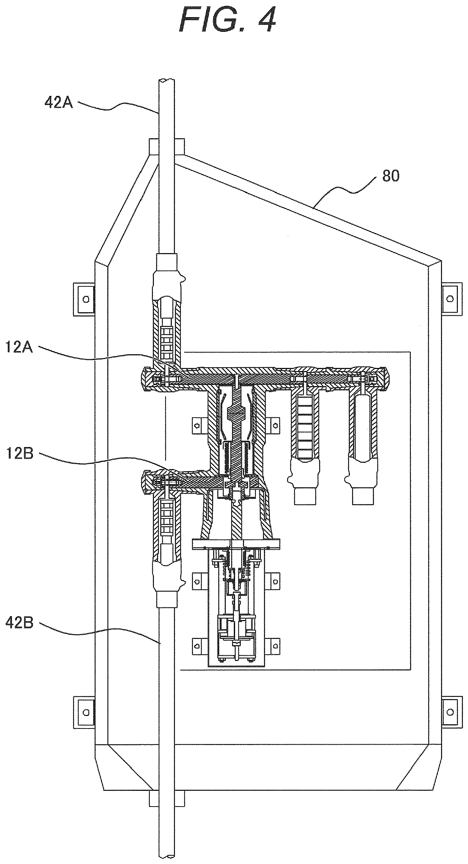

Next, using Figs. 4 and 5, a status where the switchgear unit 70 in Fig. 3 is accommodated in an exterior case 80 and is installed on a roof 72 will be described. The exterior case 80 covers the switchgear unit 70 with a front slope part and a flat surface part forming another part, to reduce air resistance. Further, the exterior case 80 mechanically holds the cables 42A and 42B. With this exterior case 80, it is possible to install the switchgear unit 70 on the roof 72 of the railway vehicle 100 without application of offset load on the bushing conductors 12A and 12B. It is possible to suppress air resistance upon installation of the switchgear unit 70 on the roof 72 of the railway vehicle 100 by covering the unit with the exterior case 80.

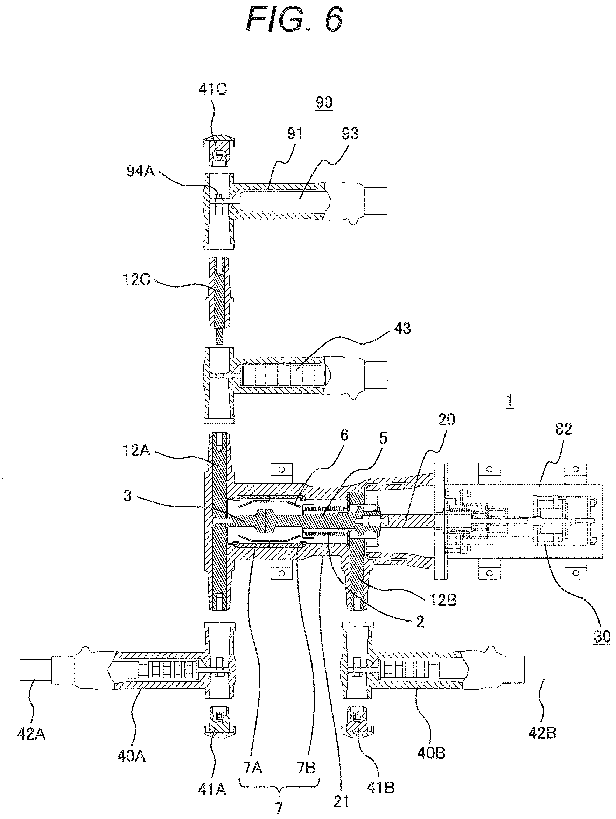

Next, a procedure of attachment of the heat radiator 90 to the switchgear unit 70 will be described using Fig. 6. First, a head part of the arrester 43 is inserted into the bushing conductor 12A. Further, the bushing conductor 12C is further inserted into the head part, so as to firmly and tightly fix the connection part of the arrester 43 to the bushing conductor 12A. Further, a head part of the heat radiator 90 is inserted into the bushing conductor 12C, and a bolt 94A is screwed in, to firmly and tightly fix the connection part of the heat radiator 90 to the bushing conductor 12C. These operations are similar to those in attachment of the cable heads 40A and 40B to the bushing conductors 12a and 12B. With this communalization of attachment operations for the cables and radiator, it is possible to improve the work efficiency. Finally, an insulation plug 41C is inserted in an upper (in the drawing) opening of the head part of the heat radiator 90, and the attachment of the heat radiator 90 is completed.

In this manner, the heat radiator 90 and the bushing conductor 12C are firmly fastened by using the bolt 94A. It is possible to efficiently transmit the heat generation from the vacuum interrupter 1 to the heat radiator 90, and to suppress the temperature of the vacuum interrupter 1 to or lower than a desired temperature value. In Fig. 6, the arrester 43 is provided between the switchgear unit 70 and the heat radiator 90, however, the arrester 43 may be omitted. Further, as the order of connection, the switchgear unit 70, then the heat radiator 90, and the arrester 43, may be connected in this order.

Note that it is preferable that the insulation plug 41C and the bolt 94A used in the heat radiator 90 are equivalent to the insulation plug and the bolt used in the T cable head. By communalizing these elements, it is possible to improve the work efficiency in the installation of the switchgear unit 70 and to attain cost reduction by reducing the part types.

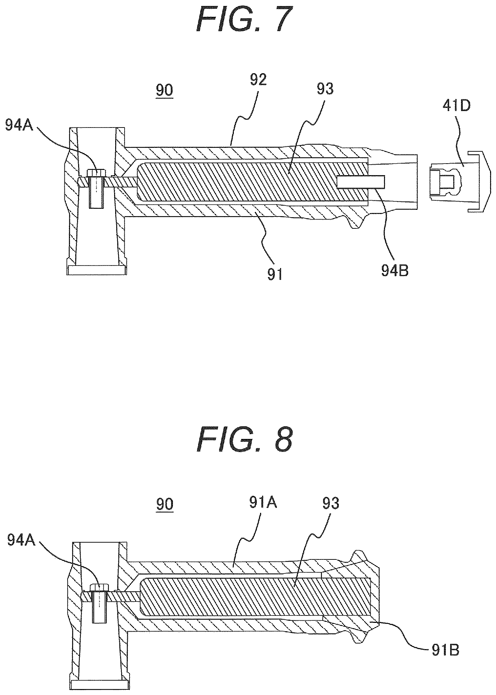

Next, using Fig. 7, the details of the structure of the heat radiator 90 will be described. In the heat radiator 90 shown in Fig. 7, a housing 91 is formed by casting with solid insulation material having flexibility such as silicone rubber, and forming a grounding layer 92 of conductive rubber layer or the like on the outer surface of the housing. A metal heat radiation member 93 having an approximately columnar shape is inserted into an insulation plug insertion part of the housing 91. Then an insulation plug 41D is screwed into the bolt 94B screwed in a right end (in the drawing) of the heat radiation member 93, to tightly close an insulation plug insertion opening at the right end (in the drawing) of the heat radiation member 93, and ensure insulation of the heat radiation member 93. Further, a flat-plate type connection part with a bolt through hole is provided in a connection part on the left side (in the drawing) of the heat radiation member 93. The connection part is projected in the head part through the insulation plug insertion part and the communication part of the head part. The bolt 94A through the bolt through hole of the connection part is screwed into the bushing conductor, to firmly and tightly fix the connection part to the bushing conductor. Thus it is possible to reduce thermal resistance between the connection part and the bushing conductor, and efficiently transmit the heat generation from the vacuum interrupter 1 via the bushing conductor and the bolt to the heat radiation member 93.

According to the heat radiator 90 according to the present embodiment as described above, by fastening with the bolt 94A, it is possible to firmly and tightly fix the heat radiation member 93 to the bushing conductor 12 on the switchgear unit 70 side. Accordingly, it is possible to reduce the thermal resistance in the connection part, improve the efficiency of heat transmission from the vacuum interrupter 1 to the heat radiator 90, and suppress temperature rise in the vacuum interrupter 1. Further, upon attachment of the heat radiator 90, the member used for attachment of the cable head is used. It is possible to improve the work efficiency upon installation of the switchgear unit 70, and to attain cost reduction in the attachment of the heat radiator 90.

### Second Embodiment

The heat radiator 90 according to a second embodiment of the present invention will be described using Fig. 8. Note that description of constituent elements equivalent to those in the first embodiment will be omitted.

In the heat radiator 90 according to the first embodiment shown in Fig. 7, the insulation plug 41D for the T cable head is screwed into the bolt 94B screwed in the heat radiation member 93. In the present embodiment, the end of the heat radiation member 93 is covered with a convex conical-shaped plug part 91B as a specialized cap in place of the insulation plug 41. More particularly, in the present embodiment, the housing 91A is formed by casting with solid insulation material having flexibility such as silicone rubber. Further, the plug part 91B containing the end of the heat radiation member 93 is integrally formed using deformation-resisting solid insulation material such as epoxy resin. When the heat radiation member 93 is inserted from the right side (in the drawing) opening of the housing 91A, the inner peripheral surface of the housing 91A and the outer peripheral surface of the plug part 91B are fit-engaged. Thus it is possible to form the heat radiator 90 covered with solid insulation material without using the bolt 94B in the first embodiment.

As in the case of the first embodiment, a bolt through hole is provided in the left side (in the drawing) connection part of the heat radiation member 93. The bolt 94A is inserted through the through hole, and the connection part is firmly fixed to the bushing conductor. In this process, the engagement part between the inner peripheral surface of the housing 91A and the outer peripheral surface of the plug part 91B is fixed without being loosened. In the present embodiment, the bolt 94B used in the first embodiment is omitted. Accordingly, it is possible to further improve the work efficiency and attain cost reduction.

### Third Embodiment

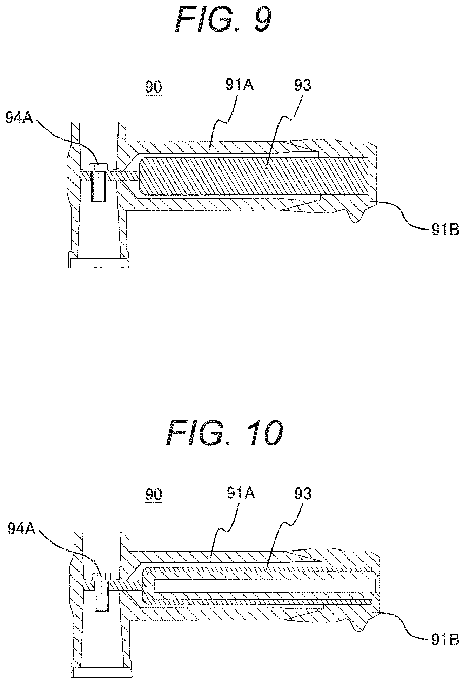

The heat radiator 90 according to a third embodiment of the present invention will be described using Fig. 9. Note that description of constituent elements equivalent to those in the above-described embodiments will be omitted.

In the second embodiment, the outer peripheral surface of the convex conical-shaped plug part 91B is fit-engaged with the inner peripheral surface of the housing 91A. In the present embodiment, the inner peripheral surface of a concave conical-shaped plug part 91B is fit-engaged with the outer peripheral surface of the housing 91A. More particularly, the housing 91A is formed by casting with solid insulation material having flexibility such as silicone rubber. Further, the plug part 91B is integrally formed using deformation-resisting solid insulation material such as epoxy resin to contain a part of the heat radiation member 93. As shown in Fig. 9, the opening side of the plug part 91B has a concave shape. It is attached so as to cover the outer periphery of the end of the housing 91A. Thus it is possible to form the heat radiator 90 to attain a similar advantage to that obtained in the second embodiment.

### Fourth Embodiment

The heat radiator 90 according to a fourth embodiment of the present invention will be described using Fig. 10. Note that description of constituent elements equivalent to those in the above-described embodiments will be omitted.

In the first to third embodiments, the heat radiation member 93 has a columnar shape. In the present embodiment, the heat radiation member 93 has a pipe shape having a hollow structure. Thus the weight of the heat radiation member 93 is reduced. Further, as shown in Fig. 10, through the hollow part at the right end (in the drawing), radiation from the inner surface of the heat radiation member 93 is promoted.

According to the present embodiment, in addition to the advantages attained in the above-described embodiments, it is possible to attain weight reduction and further improvement in radiation performance.

### Fifth Embodiment

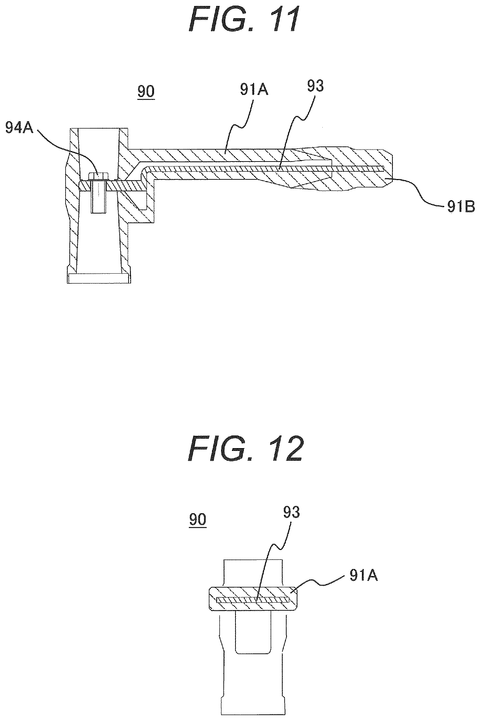

The heat radiator 90 according to a fifth embodiment of the present invention will be described using Figs. 11 and 12. Note that description of constituent elements equivalent to those in the above-described embodiments will be omitted.

Fig. 11 is a plan view. Fig. 12 is a side view of Fig. 11 viewed from the right direction in the drawing. In the above-described embodiments, the heat radiation member 93 has a columnar shape or a pipe shape. In the present embodiment, the heat radiation member 93 has a plate shape. Accordingly, the connection part is formed by bending processing. Thus it is possible to reduce the production cost. Further, in the present embodiment, it is possible to easily increase the surface area of the heat radiation member 93. Such a heat radiation member 93 is applicable to the switchgear unit 70 including the vacuum interrupter 1 having greater heat generation amount.

### Sixth Embodiment

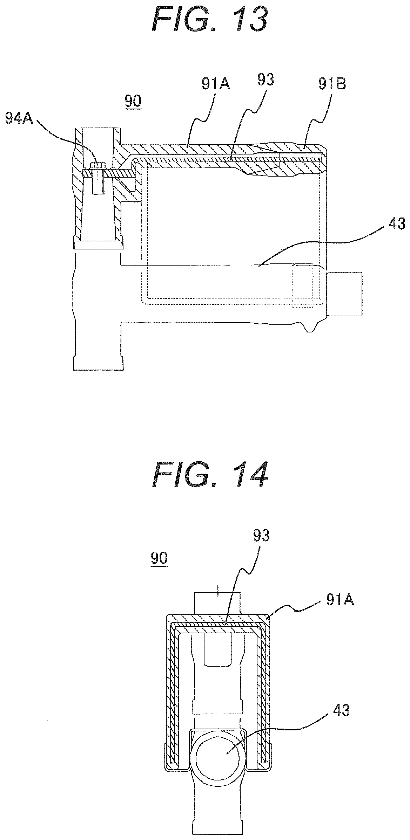

The heat radiator 90 according to a sixth embodiment of the present invention will be described using Figs. 13 and 14. Note that description of constituent elements equivalent to those in the above-described embodiments will be omitted.

Fig. 13 is a plan view. Fig. 14 is a side view of Fig. 13 viewed from the right direction in the drawing. In the fifth embodiment, the heat radiation member 93 is formed with one plate. In the present embodiment, three plates are arranged in an approximate C-shape as the heat radiation member 93. Accordingly, it is possible to further increase the surface area of the heat radiation member 93, i.e., the radiation area. Further, as shown in Fig. 14, the opposing plate parts are arranged with the arrester 43 between them. The heat radiator 90 and the arrester 43 are mechanically connected with a stay or the like. It is possible to enhance the mechanical strength of the heat radiator 90 and the arrester 43.

### Seventh Embodiment

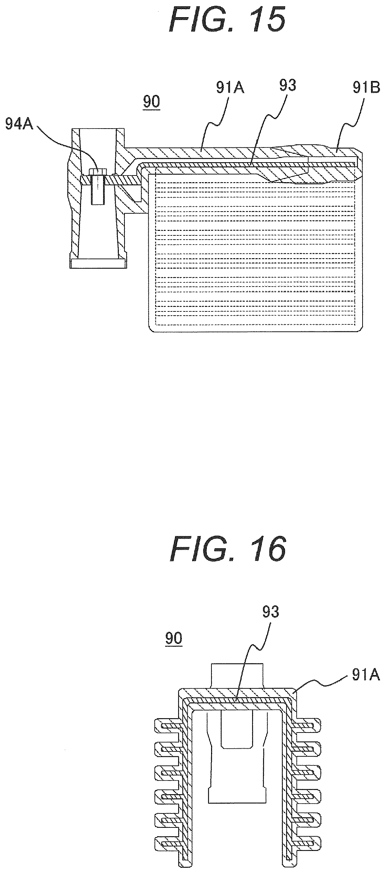

The heat radiator 90 according to a seventh embodiment of the present invention will be described using Figs. 15 and 16. Note that description of constituent elements equivalent to those in the above-described embodiments will be omitted.

Fig. 15 is a plan view. Fig. 16 is a side view of Fig. 15 viewed from the right side in the drawing. In the sixth embodiment, the heat radiation member 93 has an approximate C-shape. In the present embodiment, in addition to this shape, plural creases are provided on the outside of the opposing plates, so as to further increase the radiation area.

With this configuration, in comparison with the sixth embodiment, it is possible to obtain the heat radiator 90 with further improved radiation performance.

### Eighth Embodiment

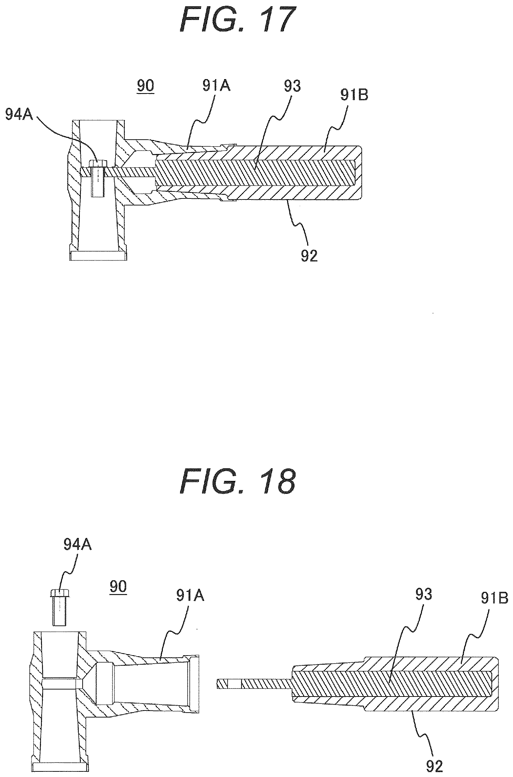

The heat radiator 90 according to an eighth embodiment of the present invention will be described using Figs. 17 and 18. Note that description of constituent elements equivalent to those in the above-described embodiments will be omitted.

Fig. 17 is a plane cross-sectional view of the parts after combining. Fig. 18 is a plane cross-sectional view of the parts before combining. In the first and second embodiments, the heat radiation member 93 is inserted into the housing 91A, then the insulation plug 41D and the plug part 91B are attached. In the present embodiment, casting is performed so as to contain the other parts of the heat radiation member 93 than the connection part in deformation-resisting solid insulation material 91B such as epoxy resin. This heat radiation member 93 is inserted from the right side (in the drawing) opening of the housing 91A, thus the heat radiator 90 is formed.

In the present embodiment, the left side (in the drawing) connection part of the heat radiation member 93 is provided with a bolt through hole. The bolt 94 is inserted through the through hole, and the connection part is firmly and tightly fixed to the bushing conductor. In the present embodiment, as a part formed by integrating the heat radiation member 93 and the plug part 91B is used, it is possible to reduce the number of parts, and reduce the number of process steps in the attachment of the heat radiator 90 to the switchgear unit 70. Thus it is possible to improve the work efficiency.

Note that the present invention is not limited to the above-described embodiments, but includes various modifications. For example, the above embodiments have been described in detail for explaining the present invention, and the invention is not necessarily limited to an embodiment having all the described constituent elements. Further, a part of constituent element of an embodiment may be replaced with those of another embodiment. Further, constituent elements of an embodiment may be added to those of another embodiment. Further, it is possible to perform addition/deletion/replacement with respect to a part of constituent elements of the respective embodiments with other constituent elements.

### [Reference Signs List]

1 vacuum interrupter
2,2A bellows
3 fixed electrode
3a fixed conductor
5 movable electrode
5a movable conductor
6 arc shield
7 ceramic insulation cylinder
12, 12A, 12B, 12C bushing conductor
20 air insulation operation rod
21 insulation case
30 electromagnetic operation device
40A, 40B cable head
41, 41A, 41C, 41D insulation plug
42A, 42B cable
43 arrester
70 switchgear unit
72 roof
80 exterior case
90 heat radiator
91, 91A housing
91B plug part
92 grounding layer
93 heat radiation member
94, 94A, 94B bolt
100 railway vehicle

## Claims

1. A heat radiator (90) for a solid insulated switchgear unit (70), attachable to a bushing conductor (12C) of the solid insulated switchgear unit, comprising:
a heat radiation member (93) of metal material, having a connection part with a bolt through hole;
a housing (91,91A) of solid insulation material, having a head part in which the bushing conductor (12C) is insertable and an insulation plug insertion part in which an insulation plug (41C) is inserted; and
a bolt (94A) configured to fasten the heat radiation member (93) to the bushing conductor (12C)
wherein the insulation plug insertion part and the head part communicate with each other, and
the bolt (94A) is inserted from the insulation plug insertion part side, through the bolt through hole of the connection part projected in the inside of the head part.

2. The heat radiator for the solid insulated switchgear unit according to claim 1,
wherein in the housing, a grounding layer is formed on an outer surface of the housing formed by casting solid insulation material having flexibility, and
the insulation plug is screwed in the bolt screwed at an end opposite to the connection part of the heat radiation member, to tightly close the heat radiation member.

3. The heat radiator for the solid insulated switchgear unit according to claim 1,
wherein in the housing, a grounding layer is formed on an outer surface of the housing formed by casting solid insulation material having flexibility, and
an outer peripheral surface or inner peripheral surface of a plug part of deformation-resisting solid insulation material is fit-engaged with an inner peripheral surface or outer peripheral surface of an end of the housing, to tightly close the heat radiation member.

4. The heat radiator for the solid insulated switchgear unit according to claim 1,
wherein the heat radiation member has a columnar shape.

5. The heat radiator for the solid insulated switchgear unit according to claim 1,
wherein the heat radiation member has a pipe shape.

6. The heat radiator for the solid insulated switchgear unit according to claim 1,
wherein the heat radiation member has a plate shape.

7. The heat radiator for the solid insulated switchgear unit according to claim 1,
wherein the heat radiation member has a C shape.

8. The heat radiator for the solid insulated switchgear unit according to claim 1,
wherein the heat radiation member has a C shape with creases.

9. The heat radiator for the solid insulated switchgear unit according to claim 1,
wherein in the housing, a grounding layer is formed on an outer surface of the housing formed by casting solid insulation material having flexibility, and
a plug part of deformation-resisting solid insulation material, including other parts of the heat radiation member than the connection part, is inserted into the insulation plug insertion part of the housing, to tightly close the heat radiation member.

10. A solid insulated switchgear unit to which the heat radiator according to any one of claims 1 to 9 is attached,
wherein the bolt is inserted through the bolt through hole provided inside the head part of the heat radiator, to fasten the heat radiator to the bushing conductor of the solid insulated switchgear unit, and
an opening of the head part of the heat radiator is tightly closed with the insulation plug.

11. A railway vehicle (100) having the solid insulated switchgear unit (70) according to claim 10, comprising:
a first cable (42A) connected to a bushing conductor on the fixed electrode (3) side of the solid insulated switchgear unit;
a second cable (42B) connected to a bushing conductor on the movable electrode (5) side of the solid insulated switchgear unit; and
an exterior case (80) that covers sides and an upper part of the solid insulated switchgear unit and mechanically holds the first cable and the second cable,
wherein the first cable, the second cable and the exterior case are provided on a roof (72) of the railway vehicle (100).

## Patentansprüche

1. Kühlkörper (90) für eine feststoffisolierte Schaltgeräteeinheit (70), der an einem Durchführungsleiter (12C) der feststoffisolierten Schaltgeräteeinheit befestigbar ist, umfassend:
ein Wärmestrahlungselement (93) aus Metallmaterial, das einen Verbindungsteil mit einer Bolzendurchführung aufweist;
ein Gehäuse (91, 91A) aus Feststoff-Isolationsmaterial, mit einem Kopfteil, in welches der Durchführungsleiter (12C) einsetzbar ist, und einem Isolationsstopfen-Einsatzbereich, in welchen ein Isolationsstopfen (41C) eingesetzt ist; und
einen Bolzen (94A), der dazu ausgelegt ist, das Wärmestrahlungselement (93) an dem Durchführungsleiter (12C) zu befestigen,
wobei der Isolationsstopfen-Einsatzbereich und das Kopfteil miteinander in Verbindung stehen, und
der Bolzen (94A) von der Seite des Isolationsstopfen-Einsatzbereichs aus durch die Bolzendurchführung des Verbindungsteils eingeführt wird, das in der Innenseite des Kopfteils vorspringt.

2. Kühlkörper für die feststoffisolierte Schaltgeräteeinheit nach Anspruch 1,
wobei am Gehäuse eine Erdungsschicht auf einer Außenfläche des Gehäuses gebildet ist, die durch Gießen von festem, flexiblem Isoliermaterial gebildet wird, und
der Isolierstopfen in den Bolzen eingeschraubt wird, der an einem dem Verbindungsteil des Wärmestrahlungselements gegenüberliegenden Ende angeschraubt ist, um das Wärmestrahlungselement fest zu verschließen.

3. Kühlkörper für die feststoffisolierte Schaltanlage nach Anspruch 1,
wobei im Gehäuse eine Erdungsschicht auf einer Außenfläche des Gehäuses gebildet ist, die durch Gießen von festem, flexiblem Isoliermaterial gebildet wird, und
eine äußere Umfangsfläche oder innere Umfangsfläche eines Stopfenteils aus verformungsbeständigem Feststoff-Isoliermaterial mit einer inneren Umfangsfläche oder einer äußeren Umfangsfläche eines Endes des Gehäuses formschlüssig verbunden ist, um das Wärmestrahlungselement dicht zu verschließen.

4. Kühlkörper für die feststoffisolierte Schaltgeräteeinheit nach Anspruch 1,
wobei das Wärmestrahlungselement eine säulenförmige Form aufweist.

5. Kühlkörper für die feststoffisolierte Schaltgeräteeinheit nach Anspruch 1,
wobei das Wärmestrahlungselement eine Rohrform aufweist.

6. Kühlkörper für die feststoffisolierte Schaltgeräteeinheit nach Anspruch 1,
wobei das Wärmestrahlungselement eine Plattenform aufweist.

7. Kühlkörper für die feststoffisolierte Schaltgeräteeinheit nach Anspruch 1,
wobei das Wärmestrahlungselement eine C-Form aufweist.

8. Kühlkörper für die feststoffisolierte Schaltgeräteeinheit nach Anspruch 1,
wobei das Wärmestrahlungselement eine C-Form mit Falten aufweist.

9. Kühlkörper für die feststoffisolierte Schaltgeräteeinheit nach Anspruch 1,
wobei am Gehäuse eine Erdungsschicht auf einer Außenfläche des Gehäuses gebildet ist, die durch Gießen von festem Isoliermaterial mit Flexibilität gebildet wird, und
ein Stopfenteil aus verformungsbeständigem Feststoff-Isoliermaterial, einschließlich anderer Teile des Wärmestrahlungselements als das Verbindungsteil, in den Isolationsstopfen-Einsatzbereich des Gehäuses eingesetzt wird, um das Wärmestrahlungselement dicht zu verschließen.

10. Feststoffisolierte Schaltgeräteeinheit, an welcher der Wärmestrahler nach einem der Ansprüche 1 bis 9 befestigt ist,
wobei der Bolzen durch das Bolzen-Durchgangsloch eingeführt wird, das innerhalb des Kopfteils des Wärmestrahlers vorgesehen ist, um den Wärmestrahler an dem Durchführungsleiter der feststoffisolierten Schalteinheit zu befestigen, und
eine Öffnung des Kopfteils des Wärmestrahlers mit dem Isolierstopfen dicht verschlossen wird.

11. Schienenfahrzeug (100) mit der feststoffisolierten Schaltgeräteeinheit (70) nach Anspruch 10, umfassend:
ein erstes Kabel (42A), das mit einem Durchführungsleiter auf der Seite der festen Elektrode (3) der feststoffisolierten Schaltgeräteeinheit verbunden ist;
ein zweites Kabel (42B), das mit einem Durchführungsleiter auf der Seite der beweglichen Elektrode (5) der feststoffisolierten Schaltgeräteeinheit verbunden ist; und
ein Außengehäuse (80), das Seiten und einen oberen Teil der feststoffisolierten Schaltgeräteeinheit abdeckt und das erste Kabel und das zweite Kabel mechanisch hält,
wobei das erste Kabel, das zweite Kabel und das äußere Gehäuse auf einem Dach (72) des Schienenfahrzeugs (100) vorgesehen sind.

## Revendications

1. Radiateur de chaleur (90) pour une unité (70) d'appareillage de commutation à isolation solide, fixable à un conducteur de traversée (12C) de l'unité d'appareillage de commutation à isolation solide, comprenant :
un élément (93) de rayonnement de chaleur d'un matériau métallique, ayant une partie de connexion avec un trou traversant pour boulon ;
un logement (91, 91A) d'un matériau d'isolation solide, ayant une partie de tête dans laquelle le conducteur de traversée (12C) est insérable et une partie d'insertion d'obturateur d'isolation dans laquelle un obturateur d'isolation (41C) est inséré ; et
un boulon (94A) configuré pour fixer l'élément (93) de rayonnement de chaleur au conducteur de traversée (12C),
dans lequel la partie d'insertion d'obturateur d'isolation et la partie de tête communiquent l'une avec l'autre, et
le boulon (94A) est inséré depuis le côté de partie d'insertion d'obturateur d'isolation, à travers le trou traversant pour boulon de la partie de connexion projetée dans l'intérieur de la partie de tête.

2. Radiateur de chaleur pour l'unité d'appareillage de commutation à isolation solide selon la revendication 1,
dans lequel, dans le logement, une couche de mise à la terre est formée sur une surface extérieure du logement formée par coulée d'un matériau d'isolation solide ayant une flexibilité, et
l'obturateur d'isolation est vissé dans le boulon vissé à une extrémité opposée à la partie de connexion de l'élément de rayonnement de chaleur, pour fermer étroitement l'élément de rayonnement de chaleur.

3. Radiateur de chaleur pour l'unité d'appareillage de commutation à isolation solide selon la revendication 1,
dans lequel, dans le logement, une couche de mise à la terre est formée sur une surface extérieure du logement formée par coulée d'un matériau d'isolation solide ayant une flexibilité, et
une surface périphérique extérieure ou une surface périphérique intérieure d'une partie d'obturation d'un matériau d'isolation solide résistant à la déformation est engagée par ajustement avec une surface périphérique intérieure ou une surface périphérique extérieure d'une extrémité du logement, pour fermer étroitement l'élément de rayonnement de chaleur.

4. Radiateur de chaleur pour l'unité d'appareillage de commutation à isolation solide selon la revendication 1,
dans lequel l'élément de rayonnement de chaleur a une forme colonnaire.

5. Radiateur de chaleur pour l'unité d'appareillage de commutation à isolation solide selon la revendication 1,
dans lequel l'élément de rayonnement de chaleur a une forme de tuyau.

6. Radiateur de chaleur pour l'unité d'appareillage de commutation à isolation solide selon la revendication 1,
dans lequel l'élément de rayonnement de chaleur a une forme de plaque.

7. Radiateur de chaleur pour l'unité d'appareillage de commutation à isolation solide selon la revendication 1,
dans lequel l'élément de rayonnement de chaleur a une forme en C.

8. Radiateur de chaleur pour l'unité d'appareillage de commutation à isolation solide selon la revendication 1,
dans lequel l'élément de rayonnement de chaleur a une forme en C avec des plis.

9. Radiateur de chaleur pour l'unité d'appareillage de commutation à isolation solide selon la revendication 1,
dans lequel, dans le logement, une couche de mise à la terre est formée sur une surface extérieure du logement formée par coulée d'un matériau d'isolation solide ayant une flexibilité, et
une partie d'obturation d'un matériau d'isolation solide résistant à la déformation, incluant des parties de l'élément de rayonnement de chaleur autres que la partie de connexion, est insérée dans la partie d'insertion d'obturateur d'isolation du logement, pour fermer étroitement l'élément de rayonnement de chaleur.

10. Unité d'appareillage de commutation à isolation solide à laquelle le radiateur de chaleur selon l'une quelconque des revendications 1 à 9 est fixé,
dans lequel le boulon est inséré à travers le trou traversant pour boulon prévu à l'intérieur de la partie de tête du radiateur de chaleur, pour fixer le radiateur de chaleur au conducteur de traversée de l'unité d'appareillage de commutation à isolation solide, et
une ouverture de la partie de tête du radiateur de chaleur est étroitement fermée avec l'obturateur d'isolation.

11. Véhicule ferroviaire (100) ayant l'unité (70) d'appareillage de commutation à isolation solide selon la revendication 10, comprenant :
un premier câble (42A) connecté à un conducteur de traversée sur le côté d'électrode fixe (3) de l'unité d'appareillage de commutation à isolation solide ;
un deuxième câble (42B) connecté à un conducteur de traversée sur le côté d'électrode mobile (5) de l'unité d'appareillage de commutation à isolation solide ; et
un boîtier extérieur (80) qui recouvre des côtés et une partie supérieure de l'unité d'appareillage de commutation à isolation solide et maintient mécaniquement le premier câble et le deuxième câble,
dans lequel le premier câble, le deuxième câble et le boîtier extérieur sont prévus sur un toit (72) du véhicule ferroviaire (100).
